# EUROPEAN PATENT SPECIFICATION

(11) **EP 4 436 393 B1**
(45) Date of publication and mention of the grant of the patent: **26.03.2025**
(21) Application number: 22823155.1
(22) Date of filing: 30.11.2022
(51) Int. Cl.: A23B 4/052

(54) **SMOKEHOUSE WITH OZONE GENERATOR**
RAUCHHAUS MIT OZONGENERATOR
FUMOIR À GÉNÉRATEUR D'OZONE

(43) Date of publication of application: 02.10.2024
(73) Proprietor: Linda-1, Sia, Kandava 3120 (LV)
(72) Inventor: INDRIKSONS, Guntars, 3120 Kandava (LV)
(74) Representative: Kromanis, Artis
(86) International application number: PCT/IB2022/061584
(87) International publication number: WO 2024/115948

(56) References cited:
- CN-A- 107 095 170
- US-A- 2 585 799
- US-A1- 2002 054 942

## Description

### Field of the invention

The present invention relates to smokehouses.

### Background of the invention

Various types of smokehouses are known for the purpose of smoking comestibles such as meat, fish, cheese, etc., using smoke which is produced by a wood fuel. The smoke is carried into a smoke chamber by suitable ducts.

Chinese utility model registration publication No. CN216983397U discloses a smoking device for processing cooked meat, which comprises a smoking chamber and a smoking module is arranged on the smoking chamber. Similar smokehouse is disclosed in Chinese utility model registration publication CN210746981U.

Korean patent application publication No. KR20050083206A discloses a smokehouse for smoking a fish and a meat where the smoke is filtered by means of a filtering device. The filtering device requires regular maintenance and reduces the efficiency of smoking as the filtering device partly restricts the flow to the smoking chamber of the smokehouse. The filtering device also removes considerable amount of smoke in result of which the processed meat does not have the same taste and look quality as smoked meat in non-filtered smoke.

Chinese patent application publication number CN 107095170A discloses a method of reducing the content of benzopyrene in smoked salted meat. The solution is a series of steps, none of them involving the application of ozone.

Polycyclic aromatic hydrocarbons (PAH) are widespread environmental contaminants representing an important group of carcinogens that have been detected in smoked food. Benzo(a)pyrene (BaP) is the most well-known and studied representative of these compounds because it is one of the most potent carcinogens for humans. To simplify the problems that have been related with PAH variety and content multiplicity, BaP has been accepted as indicator for PAH content in food products. The European Commission has introduced maximum levels for PAH in certain foodstuffs via Commission Regulation No. 1881/2006. The maximum level of benzo(a)pyrene (5 ng g⁻¹) was set for smoked meat products.

Hence it is necessary to find a solution to produce a smoked meat having maximum level of benzo(a)pyrene below 5 ng g⁻¹.

### Summary of the invention

The aim is reached by design of a smokehouse comprising a smoke chamber, a pellet burner fluidly connected to the smoke chamber via a smoke channel so that a heat generated by the pellet burner can flow into the smoke chamber. The smokehouse comprises an air flow ventilator fluidly connected to the pellet burner and configured to supply an air flow to the pellet burner. The smokehouse further comprises an ozone generator for generation an ozone, wherein the ozone generator is fluidly connected to the air flow ventilator so that the air flow suppliable to the pellet burner, first, flows into the ozone generator where the ozone in generated and the ozone/air mix is created that is supplied to the pellet burner via the air flow ventilator. The smokehouse further comprises a smoke generator which is positioned into the smoke channel. The smoke generator comprises a auger tube, in which a section of perforations is formed. The auger tube is positioned into the smoke channel so that the section of perforations is directed towards the smoke chamber.

The smoke generator itself comprises a screw and a screw conveyor motor connected to the screw and configured to rotate the screw arranged within the auger tube so that wooden pellets can be supplied to the section of the auger tube that is positioned within the smoke channel.

The equipment is designed for the industrial production of smoked meat and smoked meat products using the process of burning natural wood pellets enriched with ozone gas. The addition of ozone gas ensures a more complete wood burning process which results in generation of less smoke.

The device ensures the hot smoking process of meat and meat products in the flue gases of burning wood pellets. Flue gases are produced under ozone-enriched combustion conditions, resulting in fumes with a reduced concentration of benzo(a)pyrene in the finished product.

The smokehouse ensures smokeless smoking of meat and meat products using natural wood pellets. Smokeless smoking conditions are created by improving the pellet combustion process with ozone gas in the pellet burner, resulting in a transparent pale blue smoke.

The wood pellets are fed from the container intended for them to the combustion chamber of the pellet burner, where they are burned in an environment enriched with ozone gas. Pellets are fed evenly to the pellet burner by a threaded rotating feed auger. In the combustion chamber of the pellet burner, the pellets enter an environment enriched with ozone gas, where the combustion process of the pellets and the generation of hot flue gases take place. Ozone gas is created in an ozone generator. The hot flue gases from the combustion chamber of the pellet burner enter the smoking chamber through smoke channel and the process of smoking meat and meat products takes place.

The innovation is the application of ozone gas and the technical solution of generating ozone gas for obtaining hot flue gases in the pellet burning process. Ozone gas in the ozone generator is created using high-voltage electric discharge elements located in the housing of the ozone generator, through which a constant supply of air and ozone gas mixture is fed to the combustion chamber of the pellet burner. The ozone gas generating unit is connected to the pellet combustion chamber of the pellet burner through a ventilator or fan, which is forced air supply element.

The chemical properties of ozone gas allow it to react with practically any substance and surface it comes into contact with, so the generation and combustion of ozone gas in the combustion chamber of the pellet burner is in close proximity.

### Brief description of the drawing

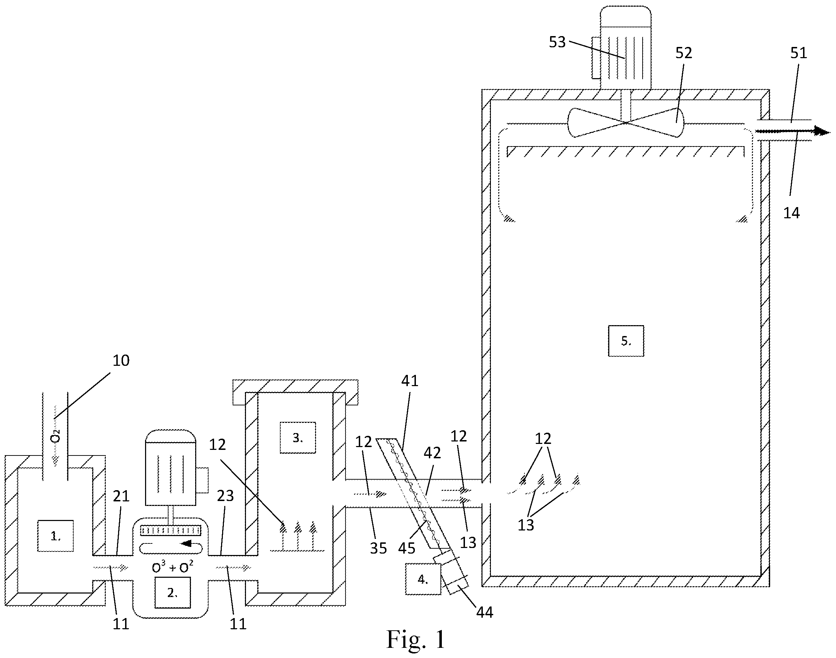

Fig. 1 is a schematic view of a smokehouse according to the invention.

### Detailed description of preferred embodiments

A smokehouse comprises a smoke chamber (5) where a meat, fish or other food is arranged for smoking. In the present embodiment of the invention the smoke chamber (5) is equipped with a smoke chamber fan (52) and a fan motor (53) connected to the fan (52) providing rotation of the smoke chamber fan (52). The fan (52) is provided in the smoke chamber (5) to provide a hot air circulation in the smoke chamber (5). This type of hot air circulation is also known as convection cooking. The smoke chamber (5) also comprises an exhaust tube (51). The smokehouse comprises a pellet burner (3) fluidly connected to the smoke chamber (5) via a smoke channel (35) so that a heat (12) generated by the pellet burner (3) can flow into the smoke chamber (5). The smokehouse also comprises an air flow ventilator (2) fluidly connected to the pellet burner (3) via an air supply tube (23) and configured to supply an air flow to the pellet burner (3). The pellet burner (3) used in this smokehouse may be any pellet burner (3) known to the skilled person.

The smokehouse is characterized in that it further comprises an ozone generator (1) for generation an ozone. The ozone generator (1) is fluidly connected via an ozone tube (21) to the air flow ventilator (2) so that the air flow (10) suppliable to the pellet burner (3), first, flows into the ozone generator (1) where the ozone generated, in result of which the ozone/air mix (11) is formed that is supplied to the pellet burner (3) via the air flow ventilator (2). The amount of ozone in the ozone/air mix (11) is in a such a big ratio that in result of burning pellets in the pellet burner (3) no smoke or minor amount of smoke is generated. In general, only a heat flow (12) or heat flow (12) with minor amount of smoke exits the pellet burner (3) and flows further to the smoke chamber (5) via the smoke channel (35). The heat flow (12) is sufficient to heat treat the meat within the smoke chamber (5), but not sufficient to classify this meat as a smoked meat.

In order to obtain the smoked meat appearance, the smokehouse further comprises a smoke generator (4). The smoke generator (4) comprises an auger tube (41), a screw (45) arranged within the auger tube (41) and a screw motor (44) connected to the screw (45) and configured to rotate the screw (45) so that wooden pellets can be supplied and transported through the auger tube (41). The auger tube (41) comprises a section of perforations (42). Part of the auger tube (41), on which is the section of the perforations (42), is positioned into the smoke channel (35). Moreover, the auger tube (41) is positioned into the smoke channel (35) so that the section of perforations (42) is directed towards the smoke chamber (5). The section of perforations (42) is directed towards the smoke chamber (5) so that the heat flow (12) from the pellet burner (3) cannot directly enter the perforations (42) but flows over or around the auger tube (41). The heat flow (12) heats up the auger tube (41) and the pellets within the auger tube (41) start to smoulder and a smoke (13) from the smouldering of the pellets exits the auger tube (41) through the section of perforations (42) and flows into the smoke chamber (5) so that a smoked meat can be obtained. Amount of pellets in the auger tube (41) is controlled so that only a predefined amount of smoke (13) enters the smoke chamber (5). The smoke and heat in the smoke chamber (5) exits said smoke chamber (5) as exhaust (14) through the exhaust tube (51).

### List of references

1 - an ozone generator;
2 - an air flow ventilator;
3 - a pellet burner;
4 - a smoke generator;
5 - a smoke chamber;
10 - an air flow;
11 - an ozone/air mix;
12 - a heat flow;
13 - a smoke;
14 - an exhaust;
21 - an ozone tube;
23 - an air supply tube;
35 - a smoke channel;
41 - an auger tube;
42 - a section of perforations;
44 - a screw motor;
45 - a screw;
51 - an exhaust tube;
52 - a smoke chamber fan; and
53 - a fan motor.

## Claims

1. A smokehouse comprising a smoke chamber (5), a pellet burner (3) fluidly connected to the smoke chamber (5) via a smoke channel (35) so that a heat (12) generated by the pellet burner (3) can flow into the smoke chamber (5), and an air flow ventilator (2) fluidly connected to the pellet burner (3) and configured to supply an air flow to the pellet burner (3), **characterized in that** the smokehouse further comprises an ozone generator (1) for generation an ozone, wherein the ozone generator (1) is fluidly connected to the air flow ventilator (2) so that the air flow (10) suppliable to the pellet burner (3), first, flows into the ozone generator (1) where the ozone in generated and the ozone/air mix (11) is created that is supplied to the pellet burner (3) via the air flow ventilator (2), and wherein the smokehouse further comprises a smoke generator (4) which is positioned into the smoke channel (35), wherein the smoke generator comprises a auger tube (41) in which a section of perforations (42) is formed, and wherein the auger tube (41) is positioned into the smoke channel (35) so that the section of perforations (42) are directed towards the smoke chamber (5).

2. The smokehouse according to claim 1, **characterized in that** the smoke generator (4) comprises a screw (45) and a screw conveyor motor (44) connected to the screw (45) and configured to rotate the screw (45) arranged within the auger tube (41) so that wooden pellets can be supplied to the section of the auger tube (41) that is positioned within the smoke channel (35).

## Patentansprüche

1. Eine Räucherkammer, umfassend eine Rauchkammer (5), einen Pelletbrenner (3), der über einen Rauchkanal (35) mit der Rauchkammer (5) strömungsmäßig verbunden ist, so dass eine vom Pelletbrenner (3) erzeugte Wärme (12) in die Rauchkammer (5) strömen kann, und einen Luftstromventilator (2), der mit dem Pelletbrenner (3) strömungsmäßig verbunden ist und so konfiguriert ist, dass er dem Pelletbrenner (3) einen Luftstrom zuführt, **dadurch gekennzeichnet, dass** die Räucherkammer ferner einen Ozongenerator (1) zur Erzeugung eines Ozons umfasst, wobei der Ozongenerator (1) mit dem Luftstromventilator (2) strömungsmäßig verbunden ist, so dass der dem Pelletbrenner (3) zuführbare Luftstrom (10) zunächst in den Ozongenerator (1) strömt, wo das Ozon erzeugt wird und das Ozon/Luft-Gemisch (11) entsteht, das dem Pelletbrenner (3) über den Luftstromventilator (2) zugeführt wird, und wobei die Räucherkammer ferner einen Rauchgenerator (4) umfasst, der in den Rauchkanal positioniert ist (35), wobei der Rauchgenerator ein Schneckenrohr (41) umfasst, in dem ein Abschnitt mit Perforationen (42) ausgebildet ist, und wobei das Schneckenrohr (41) so in den Rauchkanal (35) hinein positioniert ist, dass der Abschnitt mit Perforationen (42) in Richtung der Rauchkammer (5) gerichtet ist.

2. Räucherhaus nach Anspruch 1, **dadurch gekennzeichnet, dass** der Rauchgenerator (4) eine Schnecke (45) und einen Schneckenfördermotor (44) umfasst, der mit der Schnecke (45) verbunden ist und so konfiguriert ist, dass er die im Schneckenrohr (41) angeordnete Schnecke (45) dreht, sodass Holzpellets dem Abschnitt des Schneckenrohrs (41) zugeführt werden können, der im Rauchkanal (35) positioniert ist.

## Revendications

1. Fumoir comprenant une chambre de fumée (5), un brûleur à granulés (3) relié fluidiquement à la chambre de fumée (5) par l'intermédiaire d'un canal de fumée (35) de sorte qu'une chaleur (12) générée par le brûleur à granulés (3) puisse s'écouler dans la chambre de fumée (5), et un ventilateur de flux d'air (2) relié fluidiquement au brûleur à granulés (3) et configuré pour fournir un flux d'air au brûleur à granulés (3), **caractérisé en ce que** le fumoir comprend en outre un générateur d'ozone (1) pour générer de l'ozone, le générateur d'ozone (1) étant relié fluidiquement au ventilateur de flux d'air (2) de sorte que le flux d'air (10) pouvant être fourni au brûleur à granulés (3), s'écoule d'abord dans le générateur d'ozone (1) où l'ozone est généré et le mélange ozone/air (11) est créé qui est fourni au brûleur à granulés (3) par l'intermédiaire du ventilateur de flux d'air (2), et le fumoir comprenant en outre un générateur de fumée (4) qui est positionné dans le canal de fumée (35), le générateur de fumée comprenant un tube à vis sans fin (41) dans lequel une section de perforations (42) est formée, et dans lequel le tube à vis sans fin (41) est positionné dans le canal de fumée (35) de sorte que la section de perforations (42) soit dirigée vers la chambre de fumée (5).

2. Fumoir selon la revendication 1, **caractérisé en ce que** le générateur de fumée (4) comprend une vis (45) et un moteur de convoyeur à vis (44) relié à la vis (45) et configuré pour faire tourner la vis (45) disposée à l'intérieur du tube à vis sans fin (41) de sorte que des granulés de bois puissent être fournis à la section du tube à vis sans fin (41) qui est positionnée à l'intérieur du canal de fumée (35).
